Europäisches Patentamt

**European Patent Office**

Office européen des brevets

(11) Veröffentlichungsnummer : **0 033 491**
**B1**

(12) **EUROPÄISCHE PATENTSCHRIFT**

(45) Veröffentlichungstag der Patentschrift :
25.07.84

(21) Anmeldenummer : 81100476.1

(22) Anmeldetag : 23.01.81

(51) Int. Cl.³ : **A 47 F  3/00**, F 16 B 12/30

(54) Zarge für Korpusse, insbesondere für Vitrinen und Schaukästen.

(30) Priorität : 31.01.80 DE 8002384 U

(43) Veröffentlichungstag der Anmeldung :
12.08.81 Patentblatt 81/32

(45) Bekanntmachung des Hinweises auf die Patenterteilung : 25.07.84 Patentblatt 84/30

(84) Benannte Vertragsstaaten :
AT BE CH DE FR GB IT LI NL

(56) Entgegenhaltungen :
DE-A- 2 122 257
GB-A- 2 033 526

(73) Patentinhaber : Weyel KG
Rodenbacher Strasse Postfach 68
D-6342 Haiger/Hessen (DE)

(72) Erfinder : Winn, Klaus
Krofdorfer Strasse 138
D-6300 Giessen (DE)

(74) Vertreter : Schlee, Richard, Dipl.-Ing. et al
Patentanwälte Dipl.-Ing. R. Schlee Dipl.-Ing. A. Missling Bismarckstrasse 43
D-6300 Lahn-Giessen 1 (DE)

## Beschreibung

Die Erfindung bezieht sich auf eine Zarge für Korpusse, insbesondere für Vitrinen und Schaukästen, mit die Zargenwand bildenden Profilen und mit Eckstücken, an die die Profile angeschlossen sind, wobei mindestens ein Profil stumpf an eine zugeordnete Endfläche der Eckstücke anstößt und mittels mindestens einer Schraube an die zugeordnete Endfläche herangezogen ist, welche Schraube mit ihrem Kopf an dem Eckstück anliegt und in das anstoßende Profil eingeschraubt ist.

Bei bekannten Zargen dieser Art befindet sich in den Eckstücken eine Bohrung, die sich in Richtung der Schraubenachse erstreckt und an der an der fertigen Zarge sichtbaren Umfangsfläche des Eckstückes austritt. Diese Unterbrechung der sichtbaren Umfangsfläche ist aus ästhetischen Gründen unerwünscht. Auch bildet die Bohrung eine öffnung, über die Feuchtigkeit in die Zargenkonstruktion eindringen kann, was insbesondere bei der Benutzung im Freien nachteilig ist. Die Bohrung bildet auch eine Sammelstelle für Staub und sonstige Verschmutzungen, die nur schwer sauber zu halten ist.

Der Erfindung liegt die Aufgabe zugrunde, bei einer Zarge der eingangs genannten Art die Verbindung der Eckstücke mit anschließenden Profilen so auszubilden, daß Löcher für die Einführung von Verbindungsschrauben an der sichtbaren Umfangsfläche vermieden werden.

Diese Aufgabe wird nach der Erfindung dadurch gelöst, daß die Eckstücke hohl ausgebildet sind und an mindestens einem Ende eine von der Schraube durchgriffene Endwand aufweisen und daß an den Eckstücken im Bereich der Schraube eine seitliche öffnung angeordnet ist, über die die Schraube in einer Richtung quer zu ihrer Längsrichtung zugänglich ist.

Die Öffnung, über die der Zugang zur Schraube möglich ist, kann man bei der erfindungsgemäßen Zarge stets so anordnen, daß eine Beeinträchtigung der Sichtflächen vermieden wird. Beispielsweise läßt sich die Öffnung an der Rückseite einer Zarge anordnen, die später von einer Rückwand abgedeckt wird. Dadurch werden offenliegende Schraubenlöcher vermieden, in die Feuchtigkeit und Schmutz eindringen kann und die für das Aussehen der Zarge nachteilig sind.

Es sind sowohl Eckstücke möglich, bei denen an beiden Enden von Schrauben durchgriffene Endwände vorhanden sind (Anspruch 2) als auch Eckstücke, die an einem Ende einen Einsteckteil aufweisen (Ansprüche 8 bis 11). Die Öffnung für den Zugang zu den Schrauben kann gemäß Anspruch 3 über die gesamte Länge des Eckstückes verlaufen. Es sind jedoch auch Ausführungen möglich, bei denen nur relativ kurze Fenster vorgesehen sind.

Besonders vorteilhaft ist es, die Durchgriffsöffnungen in den Endwänden als Schlitze gemäß Anspruch 4 auszubilden. Bei einer solchen Ausführung können die Öffnungen auch kürzer sein als die Schrauben, da die Schrauben zunächst in die Profile eingeschraubt werden können und dann ein seitliches Anschieben der Eckstücke möglich ist.

Eine Form der Eckstücke gemäß Anspruch 5 eignet sich besonders für Zargen, die aus verhältnismäßig breiten und flachen Profilen bestehen. Da die Breitseiten der Eckstücke Sichtseiten der Zarge bilden, ist die Anordnung gemäß Anspruch 5 an einer Schmalseite vorteilhaft.

Wenn man gemäß Anspruch 6 an jeder Verbindungsstelle nur eine der genannten Schrauben vorsieht, ist es vorteilhaft, gemäß Anspruch 6 eine zusätzliche Verbindungsstelle vorzusehen, um die Bildung eines Spaltes zwischen Eckstück und angeschlossenem Profil mit Sicherheit zu vermeiden.

Man kann die Öffnung mit einem besonderen Deckel verschließen (Anspruch 7). Der Verschluß kann aber auch dadurch erfolgen, daß die Öffnung von einer Rückwand überdeckt wird oder daß neben dem Eckstück ein weiteres Eckstück angeordnet ist. In manchen Fällen kann die Öffnung auch unverschlossen bleiben.

Eckstücke mit Einsteckteilen werden gemäß Anspruch 8 mittels quer zur Längsrichtung der Profile angeordneten Schrauben angeschlossen. Auch dadurch werden offenliegende Schraubenlöcher vermieden. Diese Verbindung eignet sich auch zum Anschluß von zwei Zargen aneinander (Anspruch 9). Damit läßt sich zum Beispiel ein zargenförmiges Fußgestell einer Vitrine mit der Zarge der Vitrine verbinden. Für die quer zur Längsrichtung der Profile verlaufenden Schrauben erhält man ausreichend lange Gewindelöcher, wenn man gemäß Anspruch 10 besondere Leisten anformt. Dadurch wird auch bei relativ weichem Material ein Ausreißen des Gewindes vermieden. Ein Einsteckteil läßt sich weiter durch eine Mittelrippe gemäß Anspruch 11 verstärken.

Besonders vorteilhaft sind Innensechskantschrauben gemäß Anspruch 12. Solche Schrauben eignen sich besonders gut zum Festziehen, wenn ein Angriff in Achsrichtung der Schrauben nicht möglich ist, da Schlüssel für Innensechskantschrauben in der Regel als abgebogene Sechskantstäbe ausgebildet sind.

Die Endstücke werden gemäß Anspruch 13 vorteilhafterweise als Druckgußteile aus Aluminium ausgeführt. Die Erfindung jedoch ist nicht auf die Verwendung dieses Materials beschränkt. In Betracht kommen alle geeigneten Werkstoffe, so insbesondere auch Kunststoff.

In der Zeichnung sind Ausführungsbeispiele der Erfindung dargestellt. Es zeigen :

Figur 1 in stark verkleinertem Maßstab die Vorderansicht einer Vitrine, die auf einem teilweise dargestellten Fußgestell sitzt,

Figur 2 einen Ausschnitt aus Fig. 1 im Bereich des strichpunktierten Kreises II in einem gegenüber Fig. 1 stark vergrößerten Maßstab, nämlich in natürlicher Größe, wobei einige Bereiche im Schnitt dargestellt sind,

Figur 3 Schnitt und Ansicht entsprechend der Linie III-III in Fig. 2,

Figur 4 einen Horizontalschnitt entsprechend der Linie IV-IV in Fig. 3,

Figur 5 einen Ausschnitt aus Fig. 1 im Bereich des strichpunktierten Kreises V in Fig. 1 im gleichen Maßstab, in dem auch die Fig. 2 bis 4 gezeichnet sind und

Figur 6 einen Schnitt nach Linie VI-VI in Fig. 5.

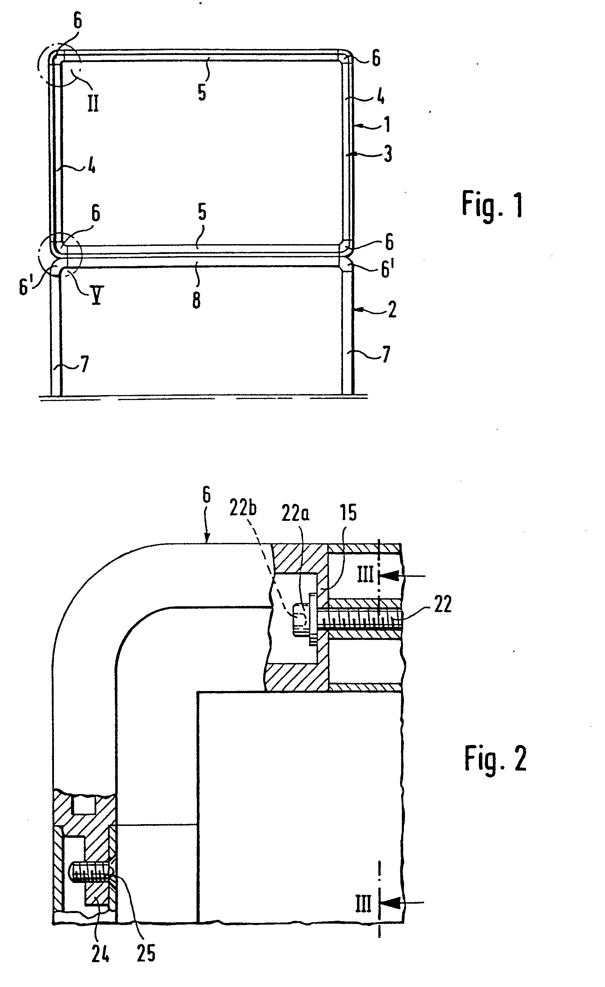

Fig. 1 zeigt eine Vitrine 1, die auf einem Fußgestell 2 sitzt. Die Vitrine hat eine insgesamt mit 3 bezeichnete Zarge, die kurze Seitenwände 4 und lange Seitenwände 5 aufweist. Diese Wände sind durch Profile gebildet, die mittels Eckstücken 6 miteinander verbunden sind.

Das Fußgestell 2 besteht aus einem zargenartigen Rahmen, von dem jedoch die untere Wand nicht dargestellt ist. Dieser Rahmen besteht aus kurzen Profilen 7 und langen Profilen 8, die mittels Eckstücken 6' miteinander verbunden sind. Parallel zur Rahmenseite 8 erstreckt sich eine nicht dargestellte gleiche Rahmenseite, die ebenfalls über Eckstücke 6' an die senkrechten Wände 7 angeschlossen ist und an der sich Füße befinden. Zunächst soll nachfolgend anhand der Fig. 2 bis 4 die Eckverbindung an der Vitrine 1 betrachtet werden.

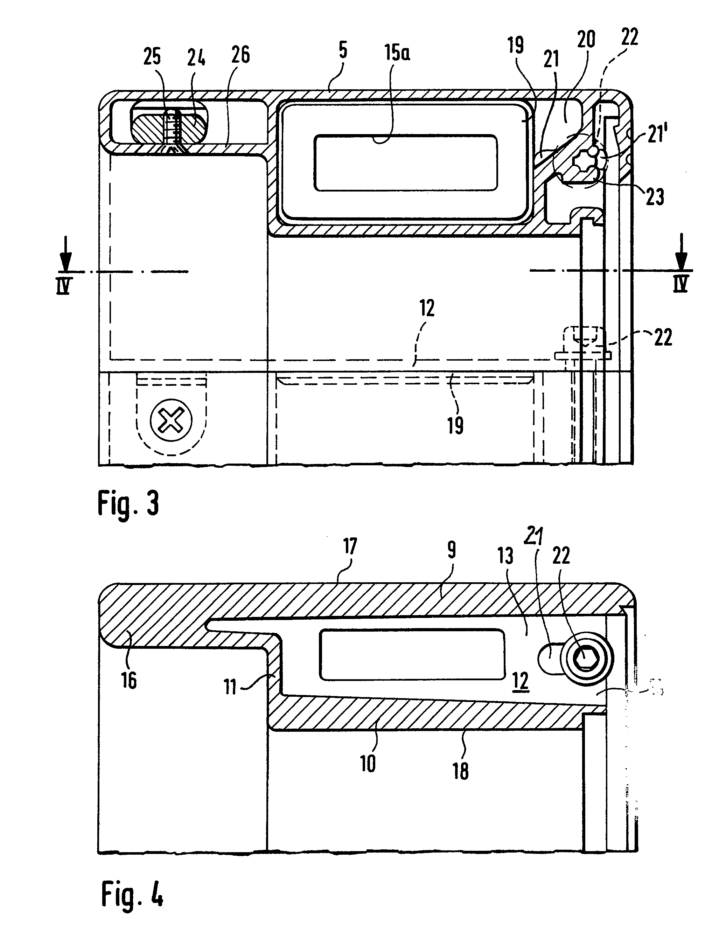

Die Eckstücke 6 sind Formteile, vorzugsweise Druckgußteile aus Aluminium. Der Querschnitt ist aus Fig. 4 zu ersehen. Fig. 4 zeigt, daß das Eckstück insgesamt hohl ausgebildet ist. Der Hohlraum ist durch eine Außenwand 9, eine Innenwand 10, eine Stirnwand 11 und Endwände 12 begrenzt. Der Hohlraum 13 hat eine der schmalen Stirnwand 11 gegenüberliegende Öffnung 14, die sich von einer Endwand 12 bis zur anderen Endwand 15 erstreckt.

Von der Stirnwand 11 erhebt sich eine Wand 16, die als Verlängerung der Wand 9 aufgefaßt werden kann. Die Wände 9 und 16 haben eine ebene Außenfläche 17, die einen Teil der Umfangsfläche der Zarge bildet. Die Innenwand 10 hat eine ebenfalls ebene Außenfläche 18. Die Wände 16 und 11 bilden einen Falz für die Aufnahme einer Tür oder einer dicken Glaswand.

An die Endwände 12 sind kurze Zapfen 19 angeformt, die (siehe Fig. 3) in einen Hohlraum 20 der Profile 5 und 4 passen. Der Außenumriß der Querschnitte der Eckstücke und der anschließenden Profile ist gleich, so daß diese zumindest an den sichtbaren Flächen ohne Stufe ineinander übergehen.

An den Endwänden 12 befinden sich Schlitze 21, die eine Zutrittsöffnung 21' am Rand der Endwände haben. Durch diesen Schlitz 21 greift eine Befestigungsschraube 22, die in das anschließende Profil eingeschraubt ist, nämlich in einen dort vorhandenen Schraubkanal 23. Die Schrauben 22 haben einen zylindrischen Kopf 22a mit einem Innensechskant 22b.

Wie man aus den Fig. 3 und 4 ersehen kann, sind die Schrauben 22 in der Nähe des Randes des Eckstückes angeordnet. Zur zusätzlichen Verbindung ist gegenüberliegend an jedem Ende des Eckstückes ein Lappen 24 angeformt, der ebenfalls in das anschließende Profil eingreift. In diesen Lappen 24 ist eine Schraube 25 eingeschraubt, die einen Senkkopf aufweist, der in der Profilwand 26 versenkt ist.

Bei der Montage einer Zarge 3 kann man zunächst Schrauben 22 in die zugeordneten Schraubkanäle 23 teilweise einschrauben. Die Eckstücke lassen sich danach durch seitliches Anschieben anbringen, wobei die teilweise eingedrehte Schraube 22 von dem Schlitz 21 umgriffen wird. Nachdem der Zapfen 19 richtig im Profil sitzt, wird die Verbindung durch Anziehen der Schraube 22 und Einsetzen der Schraube 25 fixiert. Es ist jedoch auch möglich, zunächst das Eckstück 6 auf die anschließenden Profile aufzustecken und erst dann die Schrauben 22 einzudrehen. Da sich die Öffnung 14 über die gesamte Bogenlänge des Eckstückes 6 erstreckt, können auch verhältnismäßig lange Schrauben 22 nachträglich von der Seite her eingeführt werden. Das Anziehen der Schraube 22 ist bequem möglich mittels abgebogener Sechskantstäbe, die in die Sechskantlöcher 22b eingesteckt werden.

Zur Klarstellung sei bemerkt, daß die beiden Schnittflächen in Fig. 2 in verschiedenen Ebenen liegen, nämlich die oben rechts erscheinende Schnittfläche in einer Ebene, die in Fig. 3 gesehen rechts liegt und durch die Schraube 22 geht und die in Fig. 2 links unten erscheinende Schnittfläche in einer Ebene, die in Fig. 3 gesehen links liegt und durch die Schraube 25 geht. Weiter sei bemerkt, daß die Endwände 12 und 15 jeweils Durchbrüche aufweisen. Der Durchbruch in der Endwand 15 ist mit 15a bezeichnet.

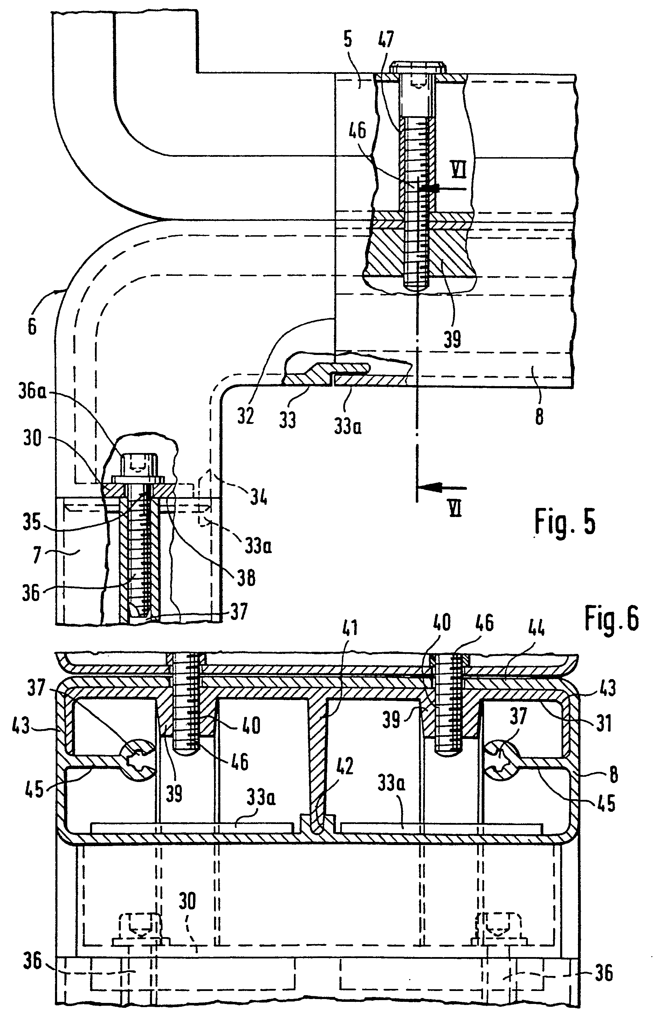

Die Eckstücke 6' des Fußgestells 2 haben nur an einem Ende eine Endwand 30, während am anderen Ende des Eckstückes ein insgesamt mit 31 bezeichneter Einsteckteil angeordnet ist, dessen Querschnitt in Fig. 6 erscheint. Der Einsteckteil 31 paßt in das Innere der Profile 8 und geht an der Stoßstelle 32 zwischen Profil 8 und Eckstück 6' über eine Stufe in die sichtbaren Außenflächen des Eckstückes 6' über. Auch das Eckstück 6' hat eine seitliche Öffnung, die sich hier allerdings an einer Breitseite befindet, nämlich an der Innenseite. Die Öffnung ist mit einem Deckel 33 verschlossen. Die Öffnung selber ist mit der Bezugszahl 34 bezeichnet. Der Einsteckteil hat an jedem Ende zwei Lappen 33a, die in das Innere des anschließenden Profiles eingreift.

An der Endwand 30 befinden sich zwei Durchgangslöcher 35 für Schrauben, die in Schraubkanäle 37 eingeschraubt sind, die sich in dem anschließenden Profil befinden. An der Endwand 30 befindet sich wieder ein kurzer Zapfen 38, der in das anschließende Profil paßt.

An den Einsteckteil 31 sind zwei breite Leisten 39 angeformt, die einmal eine wesentliche Versteifung des Einsteckteiles bringen und zum anderen als Materialansammlung für die Erzielung ausreichender Längen von Gewindelöchern 40 dienen. Zwischen den Leisten 39 ist an den Einsteckteil eine Mittelrippe 41 angeformt, die in eine Nut 42 eingreift, die sich im Inneren des anschließenden Profiles 8 befindet. Parallel zu der Mittelrippe 41 erstrecken sich Außenwände 43, die jedoch wesentlich schmäler sind als die Mittelrippe 41. Sie haben einer solche Höhe, daß sie in den lichten Zwischenraum zwischen der Profilwand 44 und Profilwänden 45 passen. An den Enden der Profilwände 45 befinden sich die bereits erwähnten Schraubkänale 37.

Wie man aus Fig. 5 ersehen kann, eignen sich die Eckstücke 6' zur Verbindung der Zarge 1 mit dem Fußgestell 2, das seinerseits zargenartig ausgebildet ist. Zur Verbindung dienen zwei Schrauben 46, die durch das untere Profil 5 der Zarge 1 quer hindurchgesteckt und in die Gewindelöcher 40 eingeschraubt sind. Um zu vermeiden, daß bei starkem Anziehen der Schrauben 46 das Profil 5 zusammengequetscht wird, ist eine Hülse 47 vorgesehen, die von der Schraube erzeugte Kräfte auffängt.

Bei der Montage des Fußgestells 2 wird die Öffnung 34 zunächst noch offengelassen, so daß die Schraubenköpfe 36a der Schrauben 36 von der Seite her zugänglich sind. Nach Festziehen der Schrauben wird unter gleichzeitiger Einfügung des Deckels 33 der Einsteckteil 31 in das Profil 8 eingesteckt. Gleichzeitig wird auch das in der Zeichnung nicht gezeigte untere Profil, das zum Profil 8 parallel ist, mit den unteren, in der Zeichnung ebenfalls nicht dargestellten Eckstücken 6' verbunden.

**Ansprüche**

1. Zarge (3 ; 2) für Korpusse, insbesondere für Vitrinen (1) und Schaukästen, mit die Zargenwände bildenden Profilen (4, 5 ; 7, 8) und mit Eckstücken (6 ; 6'), an die die Profile (4, 5 ; 7, 8) angeschlossen sind, wobei mindestens ein Profil (5 ; 7) stumpf an eine zugeordnete Endfläche (15 ; 30) der Eckstücke (6 ; 6') anstößt und mittels mindestens einer Schraube (22 ; 36) an die Zugeordnete Endfläche (15 ; 30) herangezogen ist, welche Schraude (22 ; 36) mit ihrem Kopf (22a ; 36a) an dem Eckstück (6 ; 6') anliegt und in das anstoßende Profil (5 ; 7) eingeschraubt ist, dadurch gekennzeichnet, daß die Eckstücke (6 ; 6') hohl ausgebildet sind und an mindestens einem Ende eine von der Schraube (22 ; 36) durchgriffene Endwand (12, 15 ; 30) aufweist, und daß an den Eckstücken (6 ; 6') im Bereich der Schraube (22 ; 36) eine seitliche Öffnung (14 ; 34) angeordnet ist, über die die Schraube (22 ; 36) in einer Richtung quer zu ihrer Längsachse zugänglich ist.

2. Zarge nach Anspruch 1, dadurch gekennzeichnet, daß mindestens einige Eckstücke (6) an beiden Enden von Schrauben (22) durchgriffene Endwände (12, 15) aufweisen.

3. Zarge nach Anspruch 2, dadurch gekennzeichnet, daß sich die Öffnung (14) in den Eckstücken (6 ; 6') über die gesamte Ausdehnung des Hohlraumes von Endwand zu Endwand (12, 15) erstreckt.

4. Zarge nach einem der vorhergehenden Ansprüche, dadurch gekennzeichnet, daß Durchgriffsöffnungen (21) für die Schrauben (22) als Schlitze ausgebildet sind, die eine von außen her zugängliche Eintrittsöffnung (21') aufweisen.

5. Zarge nach einem der vorhergehenden Ansprüche, dadurch gekennzeichnet, daß der Querschnitt der Eckstücke (6, 6') einen Umriß hat, der etwa die Form eines flachen Rechteckes aufweist, wobei die Öffnung (14) in einer kurzen Rechteckseite angeordnet ist.

6. Zarge nach einem der vorhergehenden Ansprüche, dadurch gekennzeichnet, daß an jeder Verbindungsstelle nur eine, in der Nähe der Öffnung (14) angeordnete Schraube (22) zum Heranziehen des zugeordneten Profiles (4, 5) angeordnet ist und daß in der Nähe der der Verbindungsstelle gegenüberliegenden Seite des Eckstückes (6, 6') eine weitere Verbindungsstelle angeordnet ist, an der in einen an das Eckstück (6, 6') angeformten Lappen (24) eine Schraube (25) eingreift, die das angeschlossene Profil (4, 5 ; 7, 8) durchgreift und deren Achse quer zur Profillängsrichtung verläuft.

7. Zarge nach einem der vorhergehenden Ansprüche, dadurch gekennzeichnet, daß die Öffnung (34) mit einem Deckel (33) verschlossen ist, der vorzugsweise Haltelappen (33a) aufweist, die in Hohlräume angeschlossener Profile (7, 8) eingreifen.

8. Zarge nach einem der vorhergehenden Ansprüche, dadurch gekennzeichnet, daß ein Ende des Eckstückes (6') als Einsteckteil (31) ausgebildet ist, das in das angeschlossene Profil (8) eingreift und daß in den Einsteckteil (31) mindestens eine Schraube (46) eingeschraubt ist, die das angeschlossene Profil (8) durchgreift und quer zu dessen Längsrichtung steht.

9. Zarge nach Anspruch 8, dadurch gekennzeichnet, daß die in den Einsteckteil (31) eingreifende Schraube (46) auch das Profil (5) einer aufgesetzten Zarge (1) derart durchgreift, daß die Schraube (46) zur Verbindung beider Zargen (1, 2) dient.

10. Zarge nach einem der Ansprüche 8 und 9, dadurch gekennzeichnet, daß an den Einsteckteil (31) zur Herstellung einer ausreichenden Gewindelänge Leisten (39) dort angeformt sind, wo Schrauben (46) eingeschraubt sind, wobei sich die Leisten (39) vorzugsweise über die gesamte Bogenlänge des Eckstückes (6') erstrecken und so als Versteifungsrippen wirken.

11. Zarge nach einem der Ansprüche 8 bis 10, dadurch gekennzeichnet, daß der Einsteckteil (31) eine Mittelrippe (41) aufweist, die sich über die gesamte Höhe des angeschlossenen Profiles (8) erstreckt und vorzugsweise mit ihrem Randbereich in eine Nut (42) im Hohlraum dieses Profiles eingreift.

12. Zarge nach einem der vorhergehenden Ansprüche, dadurch gekennzeichnet, daß mindestens die Schrauben (22 ; 36), die sich parallel zu den angeschlossenen Profilen erstrecken, einen Kopf (22a ; 36a) mit Innensechskant (22b) aufweisen.

13. Zarge nach einem der vorhergehenden Ansprüche, dadurch gekennzeichnet, daß die Eckstücke (6 ; 6') Druckgußteile sind, vorzugsweise aus Aluminium.

14. Zarge nach einem der vorhergehenden Ansprüche, dadurch gekennzeichnet, daß an die Endwände (12, 15 ; 30) Zapfen (19 ; 38) angeformt sind, die in die Hohlräume anschließender Profile passen.

## Claims

1. A frame (3 ; 2) for structures, in particular for show cases (1) and show cabinets, with profiled sections (4, 5 ; 7, 8) forming the frame walls and with end pieces (6 ; 6') to which the profiled sections (4, 5 ; 7, 8) are joined, at least one profiled section (5 ; 7) being butt-jointed against an associated end face (15 ; 30) of the end pieces (6 ; 6') and being screw-fastened to the associated end face (15 ; 30) by means of at least one screw (22 ; 36), the head (22a ; 36a) of which bears against the end piece (6 ; 6') and which is screwed into the abutting profiled section (5 ; 7), characterized in that the end pieces (6 ; 6') are made hollow and at least one end has an end wall (12, 15 ; 30) traversed by the screw (22 ; 36), and a lateral opening (14 ; 34), through which the screw (22 ; 36) is accessible in a direction transverse to the longitudinal axis thereof, is formed on the end pieces (6 ; 6') in the vicinity of the screw (22 ; 36).

2. A frame according to Claim 1, characterized in that both ends of at least some end pieces (6) have end walls (12, 15) traversed by screws (22).

3. A frame according to Claim 2, characterized in that the opening (14) in the end pieces (6 ; 6') extends over the entire extent of the cavity from end wall to end wall (12, 15).

4. A frame according to any one of the preceding Claims, characterized in that access openings (21) for the screws (22) are formed as slots which are provided with an inlet opening (21') accessible from the outside.

5. A frame according to any one of the preceding Claims, characterized in that the cross-section of the end pieces (6 ; 6') has a contour which has approximately the shape of a flat rectangle, the opening (14) being formed in a short side of the rectangle.

6. A frame according to any one of the preceding Claims, characterized in that only one screw (22) disposed in the vicinity of the opening (14) is located at each connexion point for screw-fastening the associated profiled section (4, 5), and in the vicinity of the side of the end piece (6 ; 6') opposite the connexion point there is disposed a further connexion point at which a screw (25), which passes through the adjoining profiled section (4, 5 ; 7, 8) and the axis of which extends transversely to the longitudinal direction of the profiled section, engages in a tongue (24) formed on the end piece (6 ; 6').

7. A frame according to any one of the preceding Claims, characterized in that the opening (34) is closed by a cover (33) which is preferably provided with holding flanges (33a) which engage in cavities of adjacent profiled sections (7, 8).

8. A frame according to any one of the preceding Claims, characterized in that one end of the end piece (6') is in the form of a plug-in member (31) which engages in the adjacent profiled section (8), and at least one screw (46), which passes through the attached profiled section (8) and is at right angles to its longitudinal direction, is screwed into the plug-in member (31).

9. A frame according to Claim 8, characterized in that the screw (46) engaging in the plug-in member (31) also engages in the profiled section (5) of a superimposed frame (1) in such a way that the screw (46) is used to connect the two frames (1, 2).

10. A frame according to any of Claims 8 and 9, characterized in that, in order to provide an adequate length of thread, strips (39) are formed on the plug-in member (31) at the point where screws (46) are screwed in, the strips (39) preferably extending over the entire length of the curve of the end piece (6') and thus acting as reinforcing ribs.

11. A frame according to any one of Claims 8 to 10, characterized in that the plug-in member (31) is provided with a central rib (41) which extends over the entire height of the adjacent profiled section (8) and preferably engages with its end region in a groove (42) in the cavity of the said profiled section.

12. A frame according to any one of the preceding Claims, characterized in that at least the screws (22 ; 36), which extend parallel to the adjoining profiled sections, are provided with a head (22a ; 36a) with an hexagonal recess (22b).

13. A frame according to any one of the preceding Claims, characterized in that the end pieces (6 ; 6') are die-cast parts, preferably of aluminium.

14. A frame according to any one of the preceding Claims, characterized in that plugs (19 ; 38), which fit in the cavities of adjoining profiled sections, are formed on the end walls (12, 15 ; 30).

## Revendications

1. Cadre (3 ; 2) pour des corps, en particulier pour des vitrines (1) et des présentoirs, comportant des profilés (4, 5 ; 7, 8), formant les parois du cadre, et des pièces d'angle (6 ; 6'), auxquelles les profilés (4, 5 ; 7, 8) sont raccordés, au moins un profilé (5 ; 7) étant abouté avec une face extrême correspondante (15 ; 30) des pièces d'angle (6 ; 6'), et étant tiré contre la face extrême correspondante (15 ; 30), à l'aide d'au moins une vis (22 ; 36), dont la tête (22a ; 36a) est appliquée contre la pièce d'angle (6 ; 6'), et est vissée dans le profilé abouté (5 ; 7), caractérisé par le fait que les pièces d'angle (6 ; 6') sont réalisées creuses, et présentent, au moins à une extrémité, une paroi extrême (12, 15 ; 30), traversée par la vis (22 ; 36), et qu'une ouverture latérale (14 ; 34) est aménagée dans les pièces d'angle (6 ; 6') au voisinage de la vis (22 ; 36), laquelle vis (22 ; 36) est accessible, à travers ladite ouverture latérale (14 ; 34), dans une direction transversale à l'axe longitudinal de ladite vis.

2. Cadre selon la revendication 1, caractérisé par le fait que quelques-unes au moins des pièces d'angle (6) présentent, à leurs deux extrémités, des parois extrêmes (12, 15) traversées par des vis (22).

3. Cadre selon la revendication 2, caractérisé par le fait que l'ouverture (14) s'étend dans les pièces d'angle (6 ; 6') sur toute l'étendue de l'espace creux, d'une paroi extrême à l'autre paroi extrême (12, 15').

4. Cadre suivant l'une des revendications précédentes, caractérisé par le fait que des ouvertures de passage (21) pour les vis (22) sont réalisées sous la forme de fentes, qui présentent un orifice d'entrée (21') pour les vis (22) sont réalisées sous la forme de fentes, qui présentent un orifice d'entrée (21') accessible de l'extérieur.

5. Cadre suivant l'une des revendications précédentes, caractérisé par le fait que la section transversale des pièces d'angles (6 ; 6') a un contour qui présente sensiblement la forme d'un rectangle plat, l'ouverture (14) étant aménagée dans un petit côté de ce rectangle.

6. Cadre suivant l'une des revendications précédentes, caractérisé par le fait que, au niveau de chaque zone de raccordement, une seule vis (22) est disposée, à proximité de l'ouverture (14), pour tirer sur le profilé correspondant (4, 5), et que, à proximité du côté de la pièce d'angle (6, 6'), opposé à la zone de raccordement, est aménagée une seconde zone de raccordement, au niveau de laquelle s'engage, dans une patte (24), formée sur la pièce d'angle (6, 6'), une vis (25), qui traverse le profilé raccordé (4, 5, 7, 8), et dont l'axe est transversal à la direction longitudinale du profilé.

7. Cadre selon l'une des revendications précédentes, caractérisé par le fait que l'ouverture (34) est fermée par un couvercle (33), qui présente de préférence des pattes de retenue (33a), lesquelles s'engagent dans des évidements des profilés raccordés (7, 8).

8. Cadre selon l'une des revendications précédentes, caractérisé par le fait qu'une extrémité de la pièce d'angle (6') est réalisée sous la forme d'une pièce enfichable (31) qui s'engage dans le profilé raccordé (8), et que, dans la pièce enfichable (31), est vissée au moins une vis (46), qui traverse le profilé raccordé (8) et est disposée transversalement à sa direction longitudinale.

9. Cadre selon la revendication 8, caractérisé par le fait que la vis (46) qui s'engage dans la pièce enfichable (31) traverse également le profilé (5) d'un second cadre (1), posé sur le premier, de manière que la vis (46) serve à réunir les deux cadres (1, 2).

10. Cadre selon l'une des revendications 8 et 9, caractérisé par le fait que, pour réaliser une longueur de filetage suffisante, des réglettes (39) sont formées sur la pièce enfichable (31), là où des vis (46) sont vissées, les réglettes (39) s'étendant sur toute la longueur de la pièce d'angle (6') et jouant ainsi le rôle de nervures de renfort.

11. Cadre selon l'une des revendications 8 à 10, caractérisé par le fait que la pièce enfichable (31) présente une nervure médiane (41), qui s'étend sur toute la hauteur du profilé raccordé (8), et qui s'engage, de préférence par sa partie marginale, dans une rainure (42), dans l'espace creux de ce profilé.

12. Cadre selon l'une des revendications précédentes, caractérisé par le fait qu'au moins les vis (22 ; 36), qui s'étendent parallèlement aux profilés raccordés, présentent une tête (22a ; 36a) à six pans internes (22b).

13. Cadre selon l'une des revendications précédentes, caractérisé par le fait que les pièces d'angle (6, 6') sont des pièces moulées sous pression, de préférence en aluminium.

14. Cadre selon l'une des revendications précédentes, caractérisé par le fait que des tenons (19, 38) sont formés sur les parois extrêmes (12, 15 ; 30), ces tenons s'adaptant dans les espaces creux des profilés raccordés.

Fig. 1

Fig. 2

Fig. 3

Fig. 4

Fig. 5

Fig. 6